(19) Europäisches Patentamt
European Patent Office
Office européen des brevets

(11) **EP 2 768 077 A1**

(12) **EUROPEAN PATENT APPLICATION**
published in accordance with Art. 153(4) EPC

(43) Date of publication:
**20.08.2014 Bulletin 2014/34**

(51) Int Cl.:
*H01Q 15/16* (2006.01)   *H01Q 1/08* (2006.01)
*H01Q 1/28* (2006.01)   *H01Q 1/12* (2006.01)
*F16C 11/04* (2006.01)   *F16S 3/04* (2006.01)
*B64G 1/22* (2006.01)

(21) Application number: **11791313.7**

(22) Date of filing: **10.10.2011**

(86) International application number:
**PCT/ES2011/070702**

(87) International publication number:
**WO 2013/053956 (18.04.2013 Gazette 2013/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Eads Casa Espacio S.L.**
**28022 Madrid (ES)**

(72) Inventors:
• **PLAZA BAONZA, Miguel Angel**
**E-28022 Madrid (ES)**

• **BENITO HERNANDEZ, Francisco Javier**
**E-28022 Madrid (ES)**
• **ZURITA CAMPOS, Alberto Manuel**
**E-28022 Madrid (ES)**
• **CRESPO MENENDEZ, Carlos**
**E-28022 Madrid (ES)**

(74) Representative: **Elzaburu S.L.P.**
**C/ Miguel Angel, 21**
**28010 Madrid (ES)**

(54) **COLLAPSIBLE SPACE STRUCTURE**

(57) Space deployable structure (1) able to change from a substantially cylindrical configuration into a substantially planar polygonal configuration having n sides, comprising:
- n pairs (2) of blocks, each pair (2) of blocks being formed by two single blocks (3), forming one side of the polygon of the deployed structure (1), such that the single blocks (3) have a lower base (9) substantially vertical having a prismatic shape, the blocks (3) being substantially symmetric between them with respect to the mentioned lower base (9), having their longest direction parallel to the side of the polygon formed in the deployed configuration of the structure (1);
- 2·n joints that join the blocks (3) between them by their extremes,
- a deployment system based in the simultaneous folding of all of the blocks (3) forming the structure (1) with respect to their contiguous blocks, over the corresponding joints (10, 20), in such a way that the hinge axis (11) and the cone axis (12) stay parallel to the plane of the polygon in deployed configuration, the deployment angles being always kept the same between the same type of joints (10, 20).

FIG. 11

## Description

## FIELD OF THE INVENTION

The present invention relates to a deployable structure used in space systems, particularly a deployable structure used in antennas and, more specifically, in antennas for interferometric radiometers.

## BACKGROUND

It is known in the state of the art that, for effective measurements of ocean salinity and soil moisture, remote sensing is commonly used, which includes a radiometer located on a satellite that measures the amount of electromagnetic radiation emitted by the surface of land in a particular frequency band, the cited electromagnetic radiation being able to be measured as brightness temperature.

It is said that the energy radiated by an object is its brightness temperature, since the intensity of radiation is closely related to the physical temperature of the object. The calculations known in theory are based on the energy radiated by a black body (perfect absorber that absorbs all incident energy without reflecting it) at a given frequency and temperature, transmitters being also considered perfect, that is, those that emit the most energy that can be emitted at the temperature at which they are, considering that the black body has 100% emissivity. This energy is known as black body radiation. However, in the real world there are no black bodies, so that the energy emitted if the object were a black body is modified by physical characteristics of the object itself, such as the shape and roughness of its surface, the materials contained in it, and so on., its emissivity being therefore less than 100%. These physical characteristics of the object emissivity impose the pattern of energy, which may be reflected in the polarization of electromagnetic waves, so that, as there exists a dependence on the emissivity with respect to frequency, the above emissivity pattern is usually called spectrum signature.

Remote sensing aims to characterize the spectrum signature of the surfaces observed, for which a radiometer is used, this radiometer capturing from a satellite the energy radiated by these surfaces at a given frequency range, where it is known from previous studies that the physical characteristic to be monitored strongly influences the way in which radiation is emitted. Knowing how this energy would be perceived if the body were black and making a comparison with the measurement actually obtained, the pattern of surface emissivity can be established, and hence, the physical property subject of the measurement can be quantified.

The main problem is that the radiometer measures the energy that reaches the antenna, but this is not only emitted by the surface monitored but it is affected by the atmosphere, the ionosphere, the radiation from the galaxy, the antenna efficiency, etc. Therefore, it is said that the radiometer measures the apparent temperature of the surface brightness. The effects on the actual surface radiation must be counterbalanced during the scientific post-processing of the measurements, using data measured by other sensors.

Since emissivity is a parameter highly dependent on water content and / or water vapor, based on similar physical temperatures, brightness temperature of the scene provides information about the moisture in the ground. Similarly, radiometers can reveal valuable information about the content of water suspended in the atmosphere or in precipitation, since all this combination of geophysical data have an essential importance in the study of climate and weather. It is common that radiometric instruments are dedicated to obtaining information from more than one geophysical or meteorological parameter, being therefore common to operate with multifrequency radiometers, observing simultaneously in multiple channels and, in many cases, using several polarizations.

The physical characteristics measured, as mentioned above, are ocean salinity and soil moisture. These features markedly influence the pattern of naturally radiation emitted from land surfaces, in the range of frequencies used, 1 to 2 GHz. By measuring radiation in the given frequency band, the brightness temperature is affected not only by soil moisture, but also by other contributions of the vegetation, by the effective surface temperature, by soil type and roughness. Using measured data of these characteristics, the effects can be counterbalanced and the contribution of soil moisture, the characteristic that is sought, can be isolated.

In the case of ocean salinity, the radiation is affected by the salinity of the surface layer, causing a decrease in brightness temperature of the surface. In addition, it is affected by the sea surface roughness having a strong influence on the electromagnetic waves emitted from the surface. Knowing the surface roughness of the sea and the physical temperature of the ocean surface at the time of capture of the radiation from the surface, their contribution to the brightness temperature can be counterbalanced, therefore obtaining the reading of the surface salinity.

Thus, it is possible to monitor the above properties of land surfaces remotely. The solution of placing on a satellite a radiometer capable of capturing energy at a given frequency range is often used, the radiometer having sufficient radiometric sensitivity -minimum-detectable brightness temperature-, radiometric accuracy -defined as the mean square error between the measurement and the actual value when an image is measured- and spatial resolution -length or amplitude of two adjacent points on the surface that the radiometer is capable of differentiating.

Interferometry is used for such measurements, based on that, if the measured signals are combined by a group of antennas receiving the same signal emitted by an object, much more angular resolution can be achieved by each individual antenna forming the group.

Thus, interferometers are configured, being sensors formed by multiple identical antennas following a certain geometrical arrangement, oriented in the same direction towards the radiation source to be measured. The advantage of the interferometer measurement process is that the source of radiation is measured with much better angular resolution than that achievable by each of its antennas individually; hence the higher the maximum distance between any two points the interferometer measures, the better the angular resolution. This is achieved by separating the more the better the antennas forming the interferometer. However, what has just been mentioned makes that the sensor has to be enlarged, which apparently goes against the requirement that it can easily fit in the loading module in a rocket launcher. That is why the interferometers are configured as structures that are able to deploy when they are to be used.

In practice, it is customary to distribute the antennas of an interferometer on a surface so that the result obtained is an image in two dimensions. The consequence is that the radiation emitted by a point on the surface of the Earth is measured in a very short interval of time from a number of different angles, so that its spectrum signature can be characterized more completely.

Interferometric radiometers comprising three deployable arms, forming angles of 120 ° between them, joined by a central core or shaft are known in the state of the art. In each arm there is a plurality of equally spaced elements distributed in such a way that they converge on the axis, each of these elements comprising an antenna and a receiver.

Signals received by the plurality of elements are integrated and sent to a central device in the satellite calculating the cross-correlations between signals from all combinations of pairs of elements. This device also performs a preprocessing of the data to significantly reduce the volume of telemetry that will have to be stored and transmitted to ground control and reception stations.

The system used at present comprises three deployable arms, forming angles of 120 degrees, and presents the problem that, considering the band of interest of frequency around 1400 MHz, it would be necessary to use arms longer than what is technologically possible to send into space on a single release. To preserve the desirable spatial resolution Earth observation, these systems must be synthetic aperture deployable antennas.

However, interferometric radiometers currently used, being deployable, present the problem of lack of stability and robustness required for the development of their activity. Furthermore, these systems need to have configurations that allow sufficient space to locate the plurality of elements in the system.

Deployable reflector antenna structures are known in the state of the art, such as those described in U.S. 4,030,102. The problem with this configuration is that, once deployed, it has a low rigidity and stability, needing further additional parts that give greater weight and complexity to the structure. In addition, the antenna structure once deployed cannot provide sufficiently precise positioning of the receivers. It is known for example from document U.S. 3,617,113 a deployable reflector antenna structure, presenting this type of structure problems, similar to those described for the case of U.S. 4,030,102 structure.

Thus, it would be desirable to develop an interferometric radiometer that is able to increase both the radiometric resolution of operation required as well as the geometric resolution of the workspace on the ground, while improving at the same time the mechanical stability of the system, and taking measurements more frequently from the same point on earth.

The present invention is oriented to provide these functionalities.

**SUMMARY OF THE INVENTION**

Thus, it is an object of this invention to develop a deployable structure used in space systems, as well as a procedure for its folding and deploying.

The deployable structure of the invention provides superior performance to those found to date in conventional systems known in the art.

The deployable structure of the antenna of the invention is designed with sensors in hexagonal configuration, once the antenna structure is deployed, developing a compact and robust deployment system enabling a small size of the system during launch, that meets the required positioning accuracy when the system is displayed in the hexagonal configuration.

The interferometric antenna is considered to comprise multiple individual elements or sensors, the latter comprising a single antenna and a receptor.

The deployable structure of the invention is also self-supporting, so no auxiliary elements are needed in order to obtain stiffness, guidance and shape during deployment.

Other features and advantages of the present invention will become apparent from the following detailed description of an illustrative and not limiting its purpose in connection with the accompanying figures

**DESCRIPTION OF FIGURES**

Figures 1 a and 1b respectively show the configuration of a deployable antenna which forms an interferometric radiometer, and the results of measurements and correlations of such a configuration, according to the known prior art.

Figures 2a and 2b respectively show the configuration of a deployable antenna which forms an interferometric radiometer, and the results of measurements and correlations of such a configuration, according to the present invention.

Figure 3 shows a plan view of the deployed configuration of a deployable structure used in space systems, according to the present invention.

Figure 4 shows a perspective view of the configuration to launch a deployable structure used in space systems, according to the present invention.

Figure 5 shows a perspective view of the deployed configuration of a deployable structure used in space systems, according to the present invention, which is by itself a complete satellite.

Figures 6a, 6b and 6c show the sequence of deployment of a deployable structure used in space systems, according to the present invention.

Figures 7a and 7b show the joint of rolling cones used in a deployable structure for space systems, according to a first embodiment of the present invention.

Figure 8 shows the hinge joint used in a deployable structure used in space systems, according to the present invention.

Figure 9 shows a detail of the joint in Figures 7a and 7b, according to a first embodiment of the present invention.

Figures 10 and 11 show the deployable structure used in space systems according to the present invention, coupled to a satellite.

Figures 12a and 12b show a graph of the array factor for a deployable structure used in space systems having the configuration of the present invention.

Figures 13a and 13b show a graph of the array factor for a deployable structure used in space systems according to a configuration in Y known in the prior art.

Figures 14, 15 and 16 show further details of the configuration of the joint of rolling cones used in a deployable structure for space systems, according to a first embodiment of the present invention.

## DETAILED DESCRIPTION OF THE INVENTION

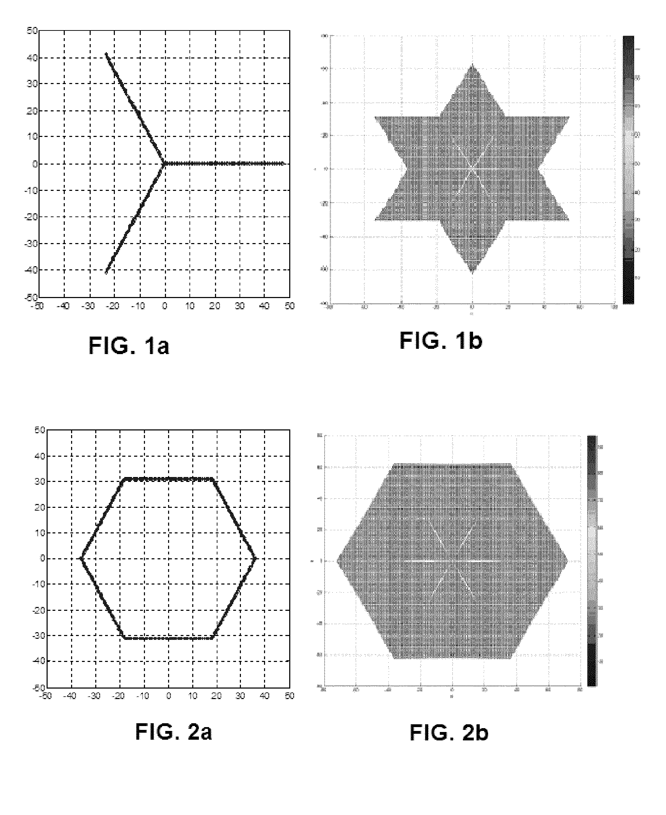

The performance of an interferometric radiometer can be determined by analyzing several factors, among which are the resolution and radiometric sensitivity. The distribution of sensors or receptors in the x, y plane of the instrument is the determining factor in its angular resolution and therefore in the resolution projected on land. In the structure of the invention the receiving sensors are arranged in a hexagon shape in the x, y plane, with a certain distance between them, as shown in Figures 2a and 2b. Faced with the known solutions of prior art, the measurement results obtained and their correlations, provide a more complete coverage and a higher level of redundancy.

Interferometric radiometry space systems at present in orbit use a Y-shaped distribution (see Figures 1a and 1b). Planes (x, y) and (u, v) for a distribution of this type with a certain total number of sensor elements (142 antennas as an example) are shown in Figures 1 a and 1b, including information on the order of redundancy for each specific point on the plane (u, v).

For the case where the receivers are arranged according to the hexagonal scheme developed by the invention (maintaining the overall diameter of the instrument, about 12 meters in the example), the planes mentioned above are shown in Figures 2a and 2b.

The improvements are notable in terms of number of points in the plane (u, v): 26,791 against 13,547 for the hexagon (Figure 2b) and Y (Figure 1b) respectively, approximately twice the number of points because the hexagonal pattern fills much of the empty areas in the plane (u, v) in the scheme Y. Additionally, the order of redundancy is also increased substantially: the hexagon has only 6 points with unique redundancy (less than 0.1 % of the points in the example), while in the Y configuration, 98% of the points have unique redundancy. This fact highlights the importance of using hexagonal configuration when considering possible failures in any of the sensors, since the effect of a possible loss of points in the plane (u, v) leads to a decrease of angular resolution and decreased sidelobe level of the instrument. For example, a failure of one full hexagon arm would not lead to any loss of spatial frequencies, thus maintaining the resolution and the sidelobe level.

Regarding the angular resolution, it is determined by the beam width at -3 dB array factor (AF) of the instrument, calculated as the inverse Fourier transform of the points in the plane (u, v) windowing (usually by a Blackman window $W$):

$$AF(\xi,\eta) = \Delta s \sum_i \sum_j W(u_i, v_j) e^{j2\pi(u_i\xi + v_j\eta)}$$

where $\Delta s$ is the area in a cell of the hexagonal grid in $(u,v)$ $\left(\dfrac{\sqrt{3}}{2} d^2\right)$ (being d the distance between sensors), and $(\xi, \eta)$ the direction cosines.

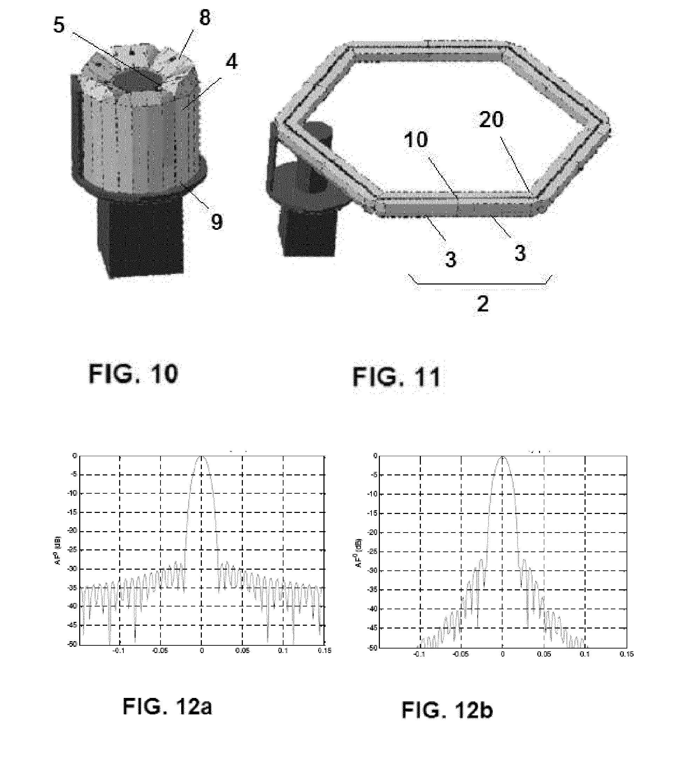

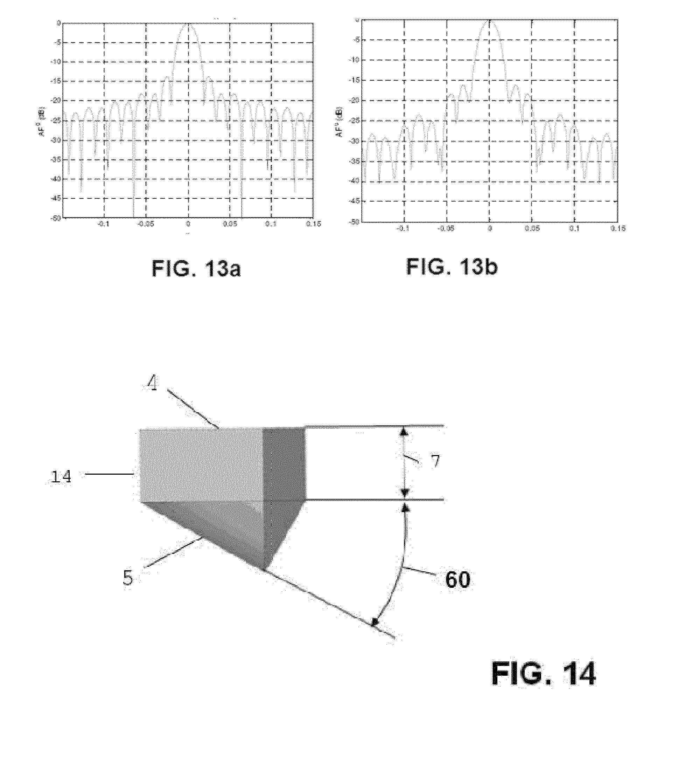

Figures 12a, 12b, 13a and 13b show that the hexagonal approach presents a beam narrower than the Y (0.95° relative to 1.17°) at the main cut planes, and therefore a better spatial resolution on ground. On the other hand, the hexagonal distribution shows a secondary side lobe level considerably lower than the Y distribution (-28.7 dB compared to -13.8 dB in the plane $\xi = 0$). This is particularly important to reduce interference from other systems and that may have a significant impact on the final quality of the reconstructed image. This high level of sidelobes in the hexagonal distribution can mitigate the effects RFI.

Finally, another important concept in an interferometric radiometer, as well as the spatial resolution, is the radiometric sensitivity, which is defined as:

$$\Delta T_B = \Delta s \frac{T_A + T_R}{\sqrt{B \tau_{eff}}} \Omega_a \alpha_w \sqrt{N_v'}$$

where $T_A$ and $T_R$ are the temperature of the antenna and the receiver respectively, B the bandwidth, $\tau_{eff}$ the effective time of integration, $\Omega_a$ the beamwidth of the elemental antenna, $\alpha_w$ form factor for the window, and

$$N_v' = \sum \frac{1}{RO}$$

the number of points in the plane (u, v) weighted by their order of redundancy RO. By way of differentiating between configurations of receivers in identical conditions, the variation in radiometric sensitivity is given only by the factor $N_v'$. In the case of a hexagonal distribution there is no substantial difference regarding the distribution and, due to the fact that despite having an increased redundancy in the order of the points in the plane (u, v), the number of these is also greater. In the case of the example, for the hexagonal distribution radiometric sensitivity is reduced only by a factor of 0.99 with respect to the sensitivity of Y.

The present invention focuses on the use of a hexagonal array geometry for improving radiometric performance, focusing on:

- improving the geometric resolution:

  o <20 m for soil moisture
  o <100 km for

- keeping the radiometric resolution:

  ◦ 3K-5K for soil moisture
  ◦ 2K-4K for ocean salinity

- improving the revisit time less than three days so you get more frequent measures of the same point on earth.

In order to improve the spatial resolution, it is necessary to increase the number of receptors in each arm, but this has a negative impact on the radiometric resolution. The solution to this commitment is to change the present shape in Y into a hexagonal shape that allows increasing the length of the arm twice and consequently also double the number of receivers. The loss of radiometric resolution due to the increased number of receptors is compensated by increased redundancy in the measures provided by the hexagonal pattern and that ultimately means less noisy measures and an improved radiometric resolution.

Thus, with a hexagonal configuration, both radiometric parameters are improved, providing at the same time both a sufficiently stable mechanical configuration having enough space to place all electronic components and units that make up the instrument in the hexagonal structure.

Since the hexagon dimensions would be around 8m of the side, it is necessary to devise a deployment concept that allows the instrument to be placed in orbit using launchers existing on the market today in which the maximum diameter of the satellite (platform and payload) is in the range of 4m.

The main advantages of the configuration of the invention versus the known configurations are:

- It provides the optimal geometric configuration for an interferometric radiometer with a diagram of synthetic aperture having very low sidelobes, which represents an improvement in one of the most problematic aspects, such as the radio frequency interference (RFI).
- Higher degree of redundancy in the measurements, which improves the radiometric resolution.
- It improves the geometric resolution on land, which is crucial to the extent of salinity in the oceans.
- It improves the image width up to 900 km and is therefore able to take measurements of the same point on earth more frequently, improving the knowledge of the behavior of the sea.
- Ground plane antennas larger in the transverse direction, about 1.5 m which reduces the influence of the back lobes of the antenna, avoiding the influence of the presence of the sun or the galaxy in the scene being taken.
- It can accommodate two parallel rows of receptors, which could work at the same frequency increasing the redundancy or at other frequencies that can correct the atmospheric effects.
- It can accommodate larger receivers operating in both polarizations (horizontal and vertical) simultaneously, increasing the time watching the scene in each polarization and therefore reducing the noise of the measurement and improving the resolution.
- It provides a reduced volume of the instrument in launch configuration, compatible with existing launchers.
- It allows accommodating within blocks of the hexagonal structure, some of the subsystems of the platform, ultimately arriving at a design in which all subsystems of the satellite platform and the instrument are included in the hexagonal structure.
- Stable structure despite its size, which ensures that errors due for example to fluctuations in the blocks of the satellite maneuvers, are small.
- Large sections of the blocks and joints of hinges and cones allowing to obtain high-precision in the angles between the blocks in the deployed configuration.

The essential characteristics of the deployable structure 1 of the invention are detailed as follows:

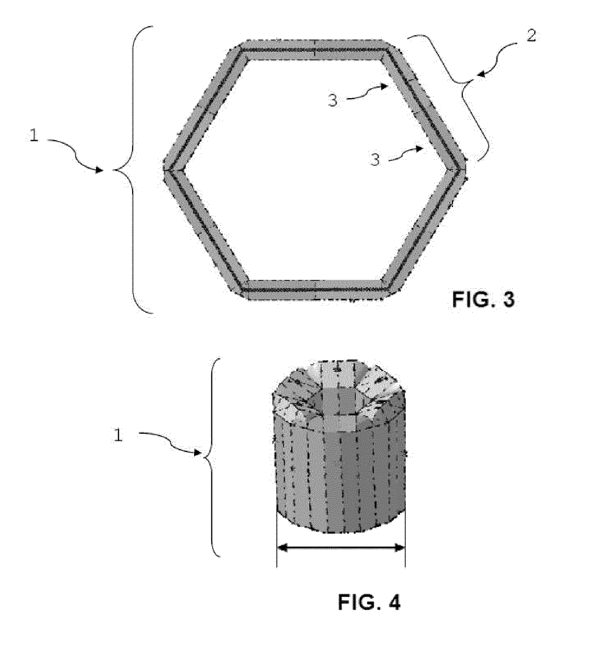

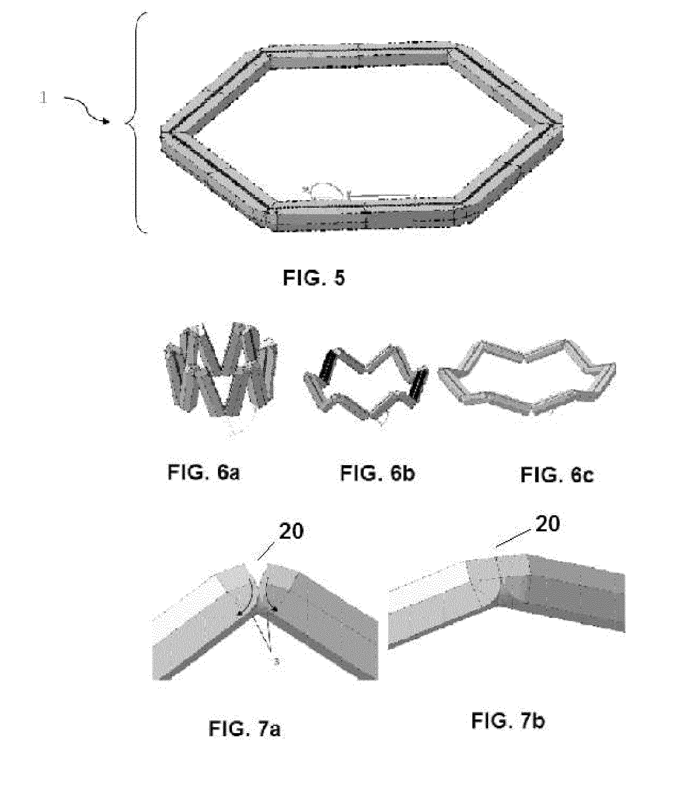

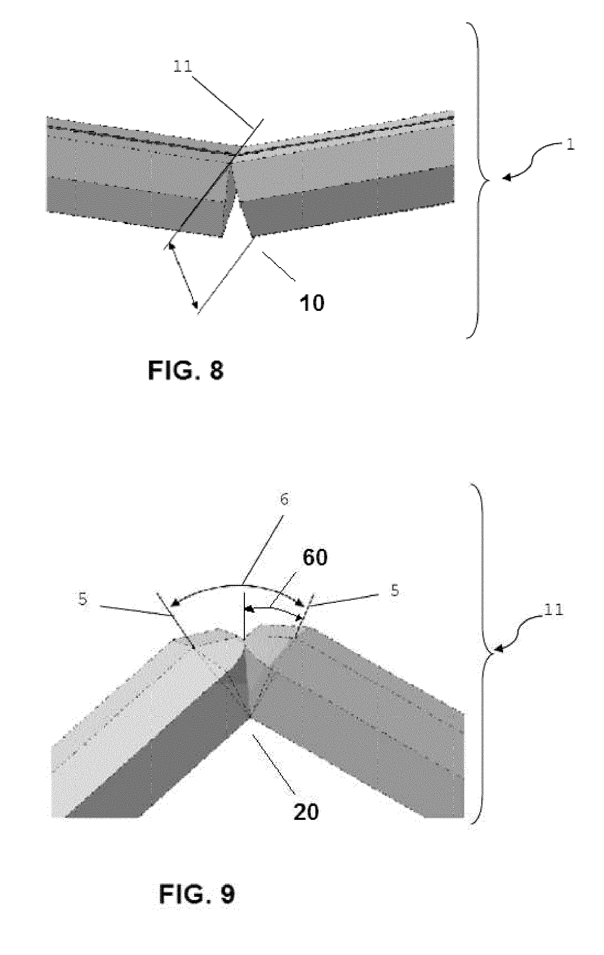

- Receivers are placed on the face of the blocks 3 that form a plane once deployed.
- It comprises a set of 12 blocks 3 united by joints at their ends.
- The blocks 3 are shaped such that in a deployed configuration, one face of each one of the blocks 3 forms a plane.
- The section of the blocks 3 is large to achieve a high stiffness with a very light structure.
- The section in the joints is large in order to obtain very stiff joints once deployed, thus having a good accuracy when forming the plane of the antenna.
- During deployment all blocks 3 rotate at the same angular velocity.
- The joints are of two types: hinged 10 and rolling cones 20.
- In the hinge joints 10 (Figure 8), the axes are always contained in a unique plane parallel to the plane containing the receivers once deployed, maintaining an angle 6 of 60° between contiguous hinge axes (see Figure 9), and an angle 60 of 30$\underline{o}$ with the lines of contact between cones in all positions (see Figure 9).
- Regarding the joint rolling cones 20 (Figures 7a, 7b and 9), the rolling or contact lines between both cones at each joint 20 are maintained throughout the movement contained in the same plane parallel to that formed by the hinge axes 11, said rolling lines always forming 60° between adjacent cone joints 20 and 30$\underline{o}$ with the adjacent hinge joints 10 (see Figure 9).
- The sectional shape of the blocks 3 combined with the configuration of the joints 10, 20 allows remaining flat faces contained in a same plane in deployed configuration and contact faces in the folded configuration to hold one block 3 to the other by HRMS and thus ensuring the correct structure 1 during launching.
- Blocks 3 represented in the figures are actually control volumes that limit the useful space for the mechanism to work, which means that it is really a structure with free space inside to accommodate systems if necessary. The configuration of this structure 1 is not limited and depends on the particular requirements of rigidity, weight and payload of each mission.
- The movement of deployment of the structure 1 is achieved by motors at each joint and position sensors as feedback signals.
- For the launch of the structure 1 in folded configuration, tying and locking mechanisms between blocks 3 to transmit loads and to avoid overloading the joints 10, 20 are needed.
- As shown in Figure 4, corresponding to the folded configuration of the structure 1, all blocks 3 are in vertical, maximizing the space available. At the beginning of the deployment blocks 3 begin to rotate supported in the joints 10, 20, this rotation making that the blocks 3 are separated from each other maintaining the hexagonal shape in plan until they are horizontal in the nominal configuration of the antenna (see Figure 11).
- Blocks 3 have much space inside that can be used to install systems so that the deployable structure 1 itself contains everything needed to form a complete satellite, comprising power systems, flight and attitude control and communication with the Earth, though it can also be a part of a satellite to which it is joint.

As it has been described, the invention discloses a deployable structure 1 able to change from a substantially cylindrical configuration into a substantially planar polygonal configuration having n sides, such that the deployable structure 1 comprises:

- n pairs 2 of blocks, each pair 2 of blocks formed by two singles blocks 3, forming one side of the polygon of the deployed structure 1, such that the single blocks 3 have a lower base 9 substantially vertical having a prismatic shape, such that the blocks 3 are substantially symmetric between them with respect to the mentioned lower base 9, having their longest direction parallel to the side of the polygon formed in the deployed configuration of the structure 1.

  o each of the blocks 3 is formed in such a way that:

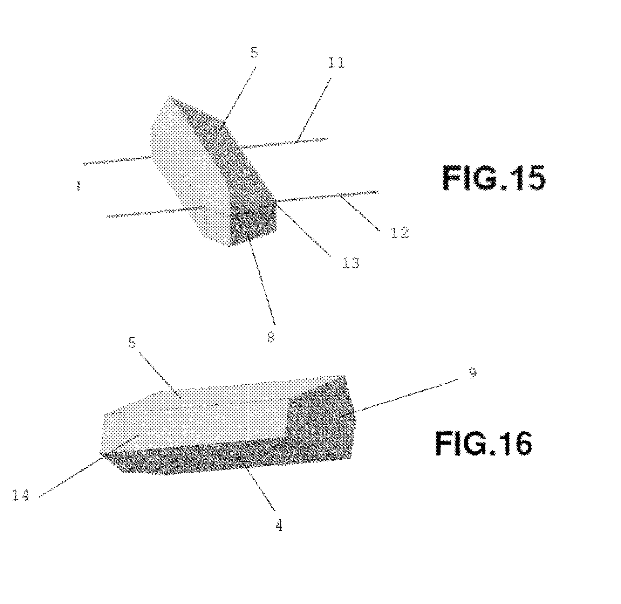

    ■ one of their plain faces, the first side face 4, belongs to the plane of the polygon in deployed configuration and the opposite face, the second side face 5, forms an angle of 360$\underline{o}$/(2·n) when seen perpendicularly to the lower base 9 of the block 3 and so that both faces, 4, 5 converge to the center of the structure of the block 3;
    ■ the upper base 8 of each block 3 (see Figure 15) forms an angle of 360$\underline{o}$/(2·n) with the opposite side lower base 9, seen perpendicularly to the plane of the polygon in deployed configuration and so that both faces, 8, 9 converge to the center of the polygon.

- 2·n joints that join the blocks 3 between them by their extremes, comprising:

    ■ n hinge joints 10, that join and articulate each pair 2 of blocks 3 between them, having hinge axes 11 that belong to the plane of the polygon in deployed configuration, and are perpendicular to the longest direction of the block 3 to which they belong;
    ■ n running cones joints 20 that join and articulate each pair 2 of blocks 3 with the contiguous one, such that the cone axis 12 of each block 3 is parallel to the hinge axis 11 of the corresponding block, a 360$\underline{o}$/(2·n) cone semi-angle and the cone vertex 13 belonging to the intersection of the inner face 14 of the block 3 and the second side face 5 opposite to the one that belongs to the plane of the polygon in deployed configuration.

- a deployment system based in the simultaneous folding of all of the blocks 3 forming the structure 1 with respect to their contiguous blocks, over the corresponding joints 10, 20, in such a way that the hinge axis 11 and the cone axis 12 stay parallel to the plane of the polygon in deployed configuration, the deployment angles being always kept the same between the same type of joints 10, 20.

The deployable structure 1 of the invention has the following features and charcateristics:

- it is compatible and coherent with the blocks described above and with their kinematics constrains also described;
- It comprises useful inner volume.

The construction of the blocks in the deployable structure 1 of the invention allows dimensioning the distance 7 in the configuration of the blocks 3 (see Figure 14) in order to obtain a high momentum of inertia of the cross section of the structure 1, providing the necessary stability of said structure 1 in the deployed configuration, without affecting to the kinematics restrictions within the system. Besides, the deployable structure 1 of the invention comprises a releasable holding system between blocks to maintain the structure 1 in a folded configuration, and also comprises a locking system in at least part of the joints 10, 20 in order to retain the structure 1 in deployed configuration.

Preferably, the structure 1 comprises a set of equipments distributed along the face of the blocks that form the plane of the polygon in deployed configuration and constitute an instrument. More preferably, these equipments are receivers and constitute an interferometric radiometer antenna.

Although the present invention has been fully described in connection with preferred embodiments, it is apparent that modifications can be made within the scope, not considering this as limited by these embodiments, but by the content of the following claims.

**Claims**

1. Deployable structure (1) able to change from a substantially cylindrical configuration into a substantially planar polygonal configuration having n sides, **characterized by** comprising::

    - n pairs (2) of blocks, each pair (2) of blocks being formed by two single blocks (3), forming one side of the polygon of the deployed structure (1), such that the single blocks (3) have a lower base (9) substantially vertical having a prismatic shape, the blocks (3) being substantially symmetric between them with respect to the mentioned lower base (9), having their longest direction parallel to the side of the polygon formed in the deployed configuration of the structure (1);
    - 2·n joints that join the blocks (3) between them by their extremes, comprising:
    - n hinge joints (10), that join and articulate each pair (2) of blocks (3) between them, having hinge axes (11) that belong to the plane of the polygon in deployed configuration, and are perpendicular to the longest direction of the block (3) to which they belong;
    - n running cones joints (20) that join and articulate each pair (2) of blocks (3) with the contiguous one, such that the cone axis (12) of each block (3) is parallel to the hinge axis (11) of the corresponding block, a 360$\underline{o}$/(2·n) cone semi-angle and the cone vertex (13) belonging to the intersection of the inner face (14) of the block (3) and the second side face (5) opposite to the one
    - a deployment system based in the simultaneous folding of all of the blocks (3) forming the structure (1) with respect to their contiguous blocks, over the corresponding joints (10, 20), in such a way that the hinge axis (11) and the cone axis (12) stay parallel to the plane of the polygon in deployed configuration, the deployment angles being always kept the same between the same type of joints (10, 20).

2. Deployable structure (1) according to claim 1 wherein each of the blocks (3) is formed in such a way that:

    - one of their plain faces, the first side face (4), belongs to the plane of the polygon in deployed configuration and the opposite face, the second side face (5), forms an angle of 360$\underline{o}$/(2·n) when seen perpendicularly to the lower base (9) of the block (3), both faces (4, 5) converging to the center of the structure of the block (3);

        - the upper base (8) of each block (3) forms an angle of 360$\underline{o}$/(2·n) with the opposite side lower base (9), seen perpendicularly to the plane of the polygon in deployed configuration, both faces (8, 9) converging to the center of the polygon.

3. Deployable structure (1) according to any of claims 1-2, wherein the configuration of the blocks (3) is such that a configuration distance (7) is modified in order to obtain the required momentum of inertia of the cross section of the structure (1).

4. Deployable structure (1) according to any of the previous claims, further comprising a releasable holding system between blocks (3) that act to maintain the structure (1) in a folded configuration.

5. Deployable structure (1) according to any of the previous claims, further comprising a locking system in at least part of the joints (10, 20) in order to retain the structure (1) in deployed configuration.

6. Deployable structure (1) according to any of the previous claims, comprising a set of equipments distributed along the face of the blocks (3) that form the plane of the polygon in deployed configuration, constituting an instrument.

7. Deployable structure (1) according to claim 6, wherein the equipments are receivers and constitute an interferometric radiometer antenna.

8. Deployable structure (1) according to any of the previous claims, wherein the deployed planar polygonal configuration of said structure (1) is a hexagon.

9. Deployable structure (1) according to any of the previous claims, constituting on its own the main structure of a complete satellite.

**Amended claims under Art. 19.1 PCT**

**1.** Space deployable structure (1) for antennas able to change from a substantially cylindrical configuration into a substantially planar polygonal configuration having n sides, **characterized by** comprising:

- n pairs (2) of blocks, each pair (2) of blocks being formed by two single blocks (3), forming one side of the polygon of the deployed structure (1), such that the single blocks (3) have a substantially prismatic shape with a lower planar base (9), the blocks (3) being substantially symmetric between them with respect to the mentioned lower base (9), having their longest direction parallel to the side of the polygon formed in the deployed configuration of the structure (1);
- n hinge joints (10), that join and articulate the blocks (3) of each pair (2) between them, having their hinge axes (11) belonging to the plane of the polygon in deployed configuration, and being perpendicular to the longest direction of the block (3) to which they belong;
- n rolling cones joints (20) that join and articulate each pair (2) of blocks (3) with the contiguous one, such that the cone axis (12) of each block (3) is parallel to the hinge axis (11) of the corresponding block, a $360º/(2 \cdot n)$ cone semi-angle and the cone vertex (13) of the joint (20) belonging to the intersection of the inner face (14) of the block (3) and the second side face (5) opposite to the first planar side face (4) that belongs to the plane of the polygon in deployed configuration;

**characterized in that** it additionally comprises:

- a deployment system based in the simultaneous folding of all of the blocks (3) forming the structure (1) with respect to their contiguous blocks, over the corresponding joints (10, 20), in such a way that the hinge axis (11) and the cone axis (12) stay parallel to the plane of the polygon in deployed configuration, the deployment angles being at every moment kept the same between joints (10, 20) of the same type.

**2.** Space deployable structure (1) for antennas according to claim 1 wherein each of the blocks (3) is formed in such a way that:

- one of their plain faces, the first side face (4), belongs to the plane of the polygon in deployed configuration and the opposite face, the second side face (5), forms an angle of $360º/(2 \cdot n)$ when seen perpendicularly to the lower base (9) of the block (3), both faces (4, 5) converging to the center of the structure of the block (3);
- the upper base (8) of each block (3) forms an angle of $360º/(2 \cdot n)$ with the opposite side lower base (9), seen perpendicularly to the plane of the polygon in deployed configuration, both faces (8, 9) converging to the center of the polygon.

**3.** Space deployable structure (1) for antennas according to any of claims 1-2, wherein the configuration of the blocks (3) is such that a configuration distance (7) is modified in order to obtain the required momentum of inertia of the cross section of the structure (1).

**4.** Space deployable structure (1) for antennas according to any of the previous claims, further comprising a releasable holding system between blocks (3) that act to maintain the structure (1) in a folded configuration.

**5.** Space deployable structure (1) for antennas according to any of the previous claims, further comprising a locking system in at least part of the joints (10, 20) in order to retain the structure (1) in deployed configuration.

**6.** Space deployable structure (1) for antennas according to any of the previous claims, comprising a set of equipments distributed along the face of the blocks (3) that form the plane of the polygon in deployed configuration, constituting an instrument.

**7.** Space deployable structure (1) for antennas according to claim 6, wherein the equipments are receivers and constitute an interferometric radiometry antenna.

**8.** Space deployable structure (1) for antennas according to any of the previous claims, wherein the deployed planar polygonal configuration of said structure (1) is a hexagon.

**9.** Space deployable structure (1) for antennas according to any of the previous claims, which contains all the subsystems of the satellite platform in such a way that the whole assembly constitutes a complete satellite.

FIG. 1a

FIG. 1b

FIG. 2a

FIG. 2b

FIG. 3

FIG. 4

**FIG. 5**

**FIG. 6a**          **FIG. 6b**          **FIG. 6c**

**FIG. 7a**          **FIG. 7b**

11

1

10

**FIG. 8**

6

60

5

5

11

20

**FIG. 9**

FIG. 10

FIG. 11

FIG. 12a

FIG. 12b

**FIG. 13a**

**FIG. 13b**

**FIG. 14**

FIG.15

FIG.16

## INTERNATIONAL SEARCH REPORT

| | International application No |
|---|---|
| | PCT/ES2011/070702 |

**A. CLASSIFICATION OF SUBJECT MATTER**
INV. H01Q15/16     H01Q1/08     H01Q1/28     H01Q1/12     F16C11/04
     F16S3/04      B64G1/22
ADD.

According to International Patent Classification (IPC) or to both national classification and IPC

**B. FIELDS SEARCHED**

Minimum documentation searched (classification system followed by classification symbols)
H01Q   F16C   F16S   E04H   B64G

Documentation searched other than minimum documentation to the extent that such documents are included in the fields searched

Electronic data base consulted during the international search (name of data base and, where practicable, search terms used)

EPO-Internal, WPI Data

**C. DOCUMENTS CONSIDERED TO BE RELEVANT**

| Category* | Citation of document, with indication, where appropriate, of the relevant passages | Relevant to claim No. |
|---|---|---|
| X | US 4 896 165 A (KOIZUMI TAKAYUKI [JP]) 23 January 1990 (1990-01-23) columns 3-6; figures 1-3 ----- | 1-9 |
| A | CN 101 369 686 A (UNIV XIDIAN [CN]) 18 February 2009 (2009-02-18) figures 3,7 ----- | 1-9 |
| A | JP 3 224303 A (TOSHIBA CORP) 3 October 1991 (1991-10-03) abstract; figures 1,2,4,6a ----- | 1-9 |
| A | US 4 030 102 A (KAPLAN RICHARD ET AL) 14 June 1977 (1977-06-14) cited in the application the whole document ----- | 1 |

-/--

| [X] Further documents are listed in the continuation of Box C. | | [X] See patent family annex. |
|---|---|---|

* Special categories of cited documents :

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 25 June 2012 | 03/07/2012 |

| Name and mailing address of the ISA/ | Authorized officer |
|---|---|
| European Patent Office, P.B. 5818 Patentlaan 2 NL - 2280 HV Rijswijk Tel. (+31-70) 340-2040, Fax: (+31-70) 340-3016 | Ribbe, Jonas |

Form PCT/ISA/210 (second sheet) (April 2005)

## INTERNATIONAL SEARCH REPORT

| | International application No |
|---|---|
| | PCT/ES2011/070702 |

**C(Continuation).   DOCUMENTS CONSIDERED TO BE RELEVANT**

| Category* | Citation of document, with indication, where appropriate, of the relevant passages | Relevant to claim No. |
|---|---|---|
| A | US 3 617 113 A (HOYER SIGURD) 2 November 1971 (1971-11-02) cited in the application the whole document ----- | 1 |

Form PCT/ISA/210 (continuation of second sheet) (April 2005)

# EP 2 768 077 A1

## INTERNATIONAL SEARCH REPORT
### Information on patent family members

| International application No |
| --- |
| PCT/ES2011/070702 |

| Patent document cited in search report | | Publication date | Patent family member(s) | | Publication date |
| --- | --- | --- | --- | --- | --- |
| US 4896165 | A | 23-01-1990 | DE | 3832546 A1 | 06-04-1989 |
| | | | JP | 1083741 A | 29-03-1989 |
| | | | US | 4896165 A | 23-01-1990 |
| CN 101369686 | A | 18-02-2009 | NONE | | |
| JP 3224303 | A | 03-10-1991 | JP | 3133056 B2 | 05-02-2001 |
| | | | JP | 3224303 A | 03-10-1991 |
| US 4030102 | A | 14-06-1977 | NONE | | |
| US 3617113 | A | 02-11-1971 | NONE | | |

Form PCT/ISA/210 (patent family annex) (April 2005)

**EP 2 768 077 A1**

**Patent documents cited in the description**

- US 4030102 A
- US 3617113 A